# EUROPEAN PATENT SPECIFICATION

(11) **EP 4 622 842 B1**
(45) Date of publication and mention of the grant of the patent: **16.09.2026**
(21) Application number: 23810446.7
(22) Date of filing: 23.11.2023
(51) Int. Cl.: B60W 60/00, B60W 30/06, B62D 15/02, B60W 50/00

(54) **ELECTRONIC CONTROL SYSTEM FOR A MOTOR-VEHICLE**
ELEKTRONISCHES STEUERSYSTEM FÜR EIN KRAFTFAHRZEUG
SYSTÈME DE COMMANDE ÉLECTRONIQUE POUR UN VÉHICULE AUTOMOBILE

(30) Priority: 24.11.2022 IT 202200024234
(43) Date of publication of application: 01.10.2025
(73) Proprietor: C.R.F. Società Consortile per Azioni, 10043 Orbassano (TO) (IT)
(72) Inventor: LORUSSO, Luca, 10043 ORBASSANO (TO) (IT); ACERNESE, Antonio, 10043 ORBASSANO (TO) (IT); BASSO, Michele, 10043 ORBASSANO (TO) (IT); BORRELLO, Giulio, 10043 ORBASSANO (TO) (IT)
(74) Representative: Studio Torta S.p.A.
(86) International application number: PCT/IB2023/061845
(87) International publication number: WO 2024/110920

(56) References cited:
- WO-A1-2021/079338
- US-A1- 2018 356 819
- GRAF PLESSEN MOGENS ET AL: "Spatial-Based Predictive Control and Geometric Corridor Planning for Adaptive Cruise Control Coupled With Obstacle Avoidance", IEEE TRANSACTIONS ON CONTROL SYSTEMS TECHNOLOGY, IEEE SERVICE CENTER, NEW YORK, NY, US, vol. 26, no. 1, 1 January 2018 (2018-01-01), pages 38 - 50, XP011674091, ISSN: 1063-6536, [retrieved on 20171206], DOI: 10.1109/TCST.2017.2664722

## Description

### CROSS-REFERENCE To RELATED APPLICATIONS

This Patent Application claims priority from Italian Patent Application No. 102022000024234 filed on November 24, 2022.

### TECHNICAL FIELD OF THE INVENTION

The present invention relates to model predictive control-based, low-speed trajectory planning with dynamic obstacle avoidance to cause autonomous motor vehicles to perform low-speed manoeuvres, such as valet parking and home-zones, in automated driving in unstructured environments.

The invention finds application in any type of road motor vehicles, regardless of whether it is used for the transportation of people, such as a car, a bus, a camper, etc., or for the transportation of goods, such as an industrial vehicle (truck, B-train, trailer truck, etc.) or a light or medium-heavy commercial vehicle (light van, van, pick-up trucks, etc.).

In this patent application, the term "trajectory" will be used to indicate the state of a motor-vehicle, defined as the set of temporal trends as position, orientation, and speed, which define the desired states of the motor-vehicle motion, over a period of time, to distinguish it from the term "path", which is generally used to indicate a sequence of positions of a motor-vehicle, without worrying about speed or higher-order terms.

### STATE OF THE ART

As is known, autonomous driving is one of the most challenging research fields in today's automotive industry, because it is expected to contribute to the quality road transportation under different aspects. Despite the fact that the improvements of active and passive safety equipment enabled to reduce the number of road accidents significantly in the last decades, still many accidents happen every day mainly due to human failure. Therefore, autonomous driving could further increase the safety level of transportation.

Another important social expectation is the simultaneous increase of fuel consumption efficiency and decrease of pollution, which may also be enabled by the rise of automation. One of the most important topic in the autonomous driving is 1 trajectory planning, which represents the motor-vehicle motion references design.

Low-speed trajectory planning can involve a large variety of different scenarios, including structured and unstructured environments, pedestrians, cyclists, etc. In this context, real-time planning is crucial to the dexterity of autonomous motor vehicles when traversing environments with unknown obstacles.

A huge number of different motor-vehicle trajectory planning approaches have been proposed, which can be approximately classified into three macro-categories: heuristic-based methods, geometric-based methods, and methods based on optimal control techniques.

Heuristic-based approaches usually apply artificial intelligence techniques, such as machine learning methods, search-based methods and random sampling methods.

Geometric-based methods are suitable mainly for low speed applications such as automated parking but, at higher speeds, these can't consider the dynamic behaviour of motor-vehicle and therefore its stability. Most of the geometric-based and heuristic-based methods generate paths instead of trajectories. To obtain a trajectory, some speed profile could be used to convert the computed path into a trajectory.

Optimal control-based methods, use optimal control techniques such as MPC (Model Predictive Control) and NLP (Non-Linear Programming) in order to generate the trajectory. Optimization techniques are used to find the appropriate control input sequence, *i.e.,* steering wheel angle and motor-vehicle longitudinal acceleration, that drives the motor-vehicle to the desired end-point. The behaviour of the system in term of system states to the given sequence of control actions is computed by a model-based prediction. These methods enable the direct definition of trajectories instead of paths.

A real-time, MPC-based, low-speed trajectory planning is proposed in WO 2021/079338 A1 to the present Applicant.

In particular, WO 2021/079338 A1 discloses an automotive electronic dynamics control system for a motor-vehicle equipped with an automotive automated driving system designed to cause the motor-vehicle to perform low-speed manoeuvres in automated driving and comprising an automotive sensory system designed to sense motor-vehicle-related quantities, and automotive actuators comprising an Electric Power Steering, a Braking System and a Powertrain (PT).

The electronic dynamics control system is disclosed to be designed to implement a Driving Path Planner designed to receive data representative of static obstacles in the surroundings of the motor vehicle and representing static space constraints to the motion of the motor vehicle, and compute, based on the received data, a planned driving path for the motor vehicle during a low-speed manoeuvre performed in automated driving.

The electronic dynamics control system is disclosed to be designed to further implement a Model Predictive Control (MPC)-based Trajectory Planner and Controller designed to receive from the Driving Path Planner data representative of the planned driving path and from the automotive sensory system data representative of positions and orientations of the motor vehicle and of dynamic obstacles in the surroundings of the motor vehicle and representing dynamic space constraints to the motion of the motor vehicle, and compute, based on the received data, a planned lateral trajectory and a planned longitudinal trajectory for the motor vehicle during the low-speed manoeuvre performed in automated driving.

The electronic dynamics control system is disclosed to be designed to further implement a Motion Controller designed to receive from the Trajectory Planner and Controller data representative of the planned lateral and longitudinal trajectories, and compute commands for the Electric Power Steering based on the planned lateral trajectory, and for the Braking System and the Powertrain based on the planned longitudinal trajectory.

The Driving Path Planner is disclosed to be designed to compute the planned driving path within an obstacle-free driving corridor, within which the motor vehicle may be driven and made up of a series of driving path segments each with a length and an orientation referenced in an inertial reference frame.

The MPC-based Trajectory Planner and Controller is disclosed to comprises an MPC-based Lateral Trajectory Planner and Controller designed to compute the planned lateral trajectory as a series of steering requests (*δ*) referenced in a motor vehicle reference frame, and an MPC-based Longitudinal Trajectory Planner and Controller designed to compute the planned longitudinal trajectory as a series of longitudinal acceleration requests.

The Lateral Trajectory Planner and Controller is disclosed to be designed to further compute the planned lateral trajectory based on a linearized Model which exhibits a representation singularity whenever the relative orientation of a couple of successive driving path segments of the planned driving path is equal to or higher than a given amount, and to dynamically modify relative orientation of the motor-vehicle reference frame and the inertial reference frame along the planned driving path to cause the relative orientations of all of the couples of successive driving path segments of the planned driving path to be lower than the given amount.

In particular, the Lateral Trajectory Planner and Controller is disclosed to be designed to compute the orientation of the motor-vehicle reference frame relative to the inertial reference frame based on, in particular as a (linear) interpolation of, the orientations of the driving path segment currently driven by the motor vehicle and of one or more of the next driving path segments.

US 2018/356819 discloses a method for autonomously operating a vehicle. The method includes receiving, at a processor, at least vehicle state data and vehicle object environment data; generating, with the processor, an optimal path for the vehicle with a cost function based on the vehicle state data and the vehicle object environment data; identifying, with the processor, at least one critical condition constraint based on at least one of the vehicle or vehicle environment; modifying, with the processor, at least a first portion of the optimal path based on the at least one critical condition constraint to result in a short-range trajectory portion; generating a resulting trajectory with the short-range trajectory portion; and implementing the resulting trajectory on the vehicle.

A paper titled "Spatial-Based Predictive Control and Geometric Corridor Planning for Adaptive Cruise Control Coupled With Obstacle Avoidance", by Mogens Graf Plessen et al, published on 2018, 1st January, in IEEE Transactions on Control System Technology, Vol. 26, discloses an integrated control approach for autonomous driving comprising a corridor path planner that determines constraints on vehicle position, and a linear time-varying model predictive controller combining path planning and tracking in a road-aligned coordinate frame.

### SUBJECT-MATTER AND SUMMARY OF THE INVENTION

The aim of the present invention is to provide an improved MPC-based, low-speed trajectory planning with dynamic obstacle avoidance that is able to generate a dynamically feasible, comfortable, and customizable trajectory that allows motor-vehicles to perform low-speed manoeuvres in automated driving.

According to the present invention, an automotive electronic dynamics control system for an autonomous motor vehicle is provided, as claimed in independent claim 1. Advantageous embodiments are defined in the dependent claims.

### BRIEF DESCRIPTION OF THE DRAWINGS

Figure 1 shows a block diagram of an automotive automated driving system to perform low-speed manoeuvres.
Figure 2 shows an automotive sensory platform of the an automotive automated driving system.
Figure 3 shows inertial and motor-vehicle reference frames for lateral control.
Figure 4 shows a general block diagram of trajectory planning and control for low-speed manoeuvres.
Figure 5 shows a general block diagram of longitudinal control setup.
Figure 6 shows a flowchart of an algorithm of rotation angle optimization.
Figures 7 and 8 comparatively show choices of orientation according to the state of the art and to an embodiment described in the present disclosure, respectively.
Figures 9 and 10 comparatively show *ad hoc* free-corridor constructed according to the state of the art and to an embodiment of the present disclosure, respectively.
Figure 11 shows a flowchart of an algorithm for real-time modifying boundaries of the free-corridor.
Figures 12 and 13 show graphically two step of the algorithm of Figure 11.

### DETAILED DESCRIPTION OF PREFERRED EMBODIMENTS OF THE INVENTION

The present invention will now be described in detail with reference to the attached figures to allow a person skilled in the art to make and use it. Various modifications to the described embodiments will be immediately apparent to the persons skilled in the art and the generic principles described can be applied to other embodiments and applications without departing from the protective scope of the present invention, as defined in the attached claims. Therefore, the present invention should not be considered limited to the described and illustrated embodiments, but it must be accorded the widest protective scope in accordance with the described and claimed characteristics.

Furthermore, the examples are provided for illustrative purposes only and as such should not be considered limiting.

In particular, the block diagrams included in the attached figures and described below are not intended as a representation of structural characteristics or constructive limitations, but must be interpreted as a representation of functional characteristics, i.e. intrinsic properties of the devices and defined by the obtained effects or functional limitations, which can be implemented in different ways so as to protect their functionalities (operating abilities).

In order to facilitate the understanding of the embodiments described herein, reference will be made to some specific embodiments and a specific language will be used to describe the same. The terminology used in the present document has the purpose of describing only particular embodiments, and is not intended to limit the scope of the present invention.

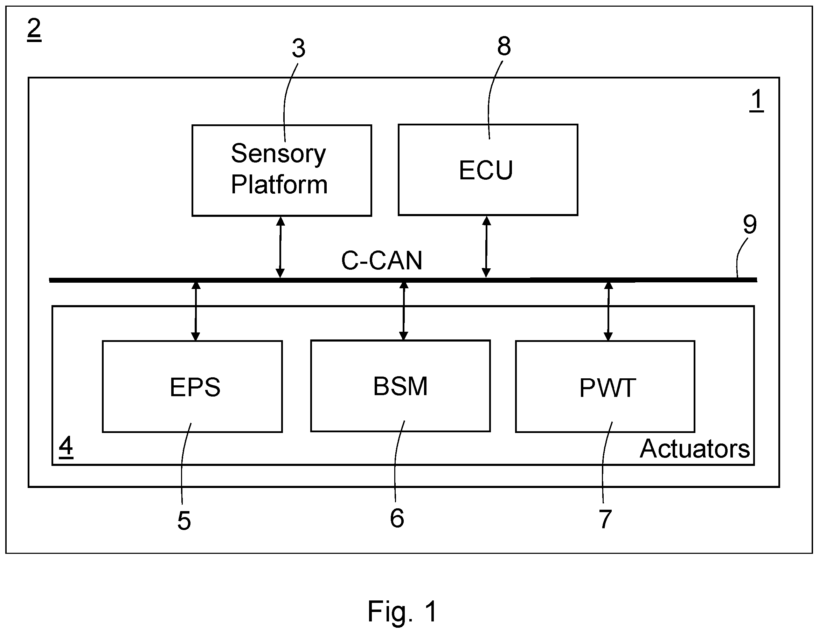

Figure 1 shows a block diagram of an automotive electronic automated driving system **1** of a motor vehicle **2** and designed to cause the motor vehicle **2** to perform low-speed manoeuvres in automated driving.

As shown in Figure 1, the automated driving system **1** comprises:
- automotive systems, of which only those involved in the implementation of the present invention will be described below, and comprising, *inter alia,* an automotive sensory system or platform **3** designed to detect motor-vehicle-related quantities comprising, by way of example, wheel angle, steering wheel angle, yaw rate, longitudinal and lateral acceleration, position, etc., and automotive actuators **4** comprising, *inter alia,* Electric Power Steering (EPS) **5,** Braking System Module (BSM) **6,** and PoWerTrain (PWT) **7;** and
- an automotive electronic control unit (ECU) **8** designed to communicate, via an automotive on-board communication network **9,** such as a high-speed CAN, also known as C-CAN, FlexRAy or others, with the automotive sensory platform **3** and the automotive actuators **4,** directly or indirectly, i.e., via dedicated automotive electronic control units, and to store and execute an automated driving software comprising software instructions which, when executed, cause the ECU **8** to become configured to communicate and cooperate with the with the automotive sensory platform **3** and the automotive actuators **4** to cause the motor vehicle **2** to perform low-speed manoeuvres in automated driving.

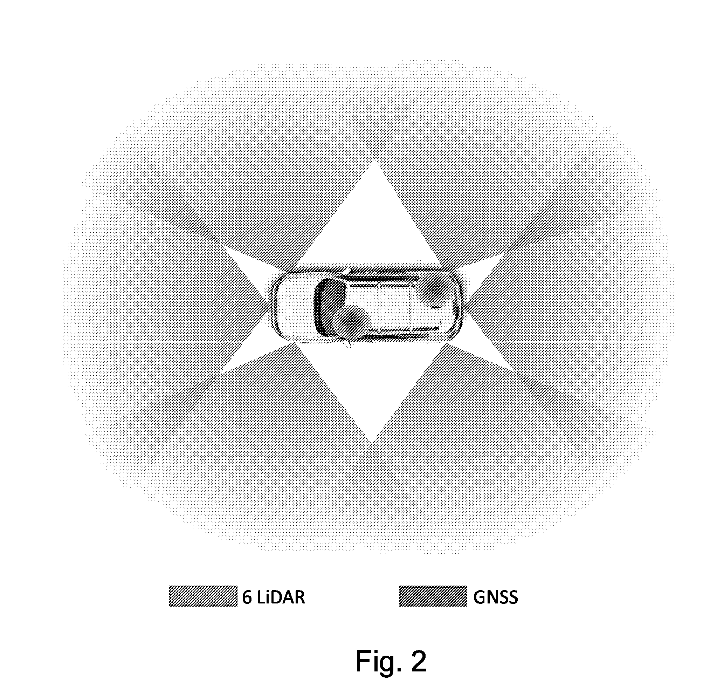

The automotive sensory platform **3,** an exemplary embodiment of which is shown in Figure 2, may comprise traditional normal production ESC inertial Active Chassis sensors comprising longitudinal and lateral acceleration sensors, yaw rate sensors, and environment sensors including a (dual antenna) GNSS receiver, one or different forward-looking stereo cameras, a normal production forward-looking camera, one or different lidar sensors, one or more radar sensors, and a number of ultrasonic sensors.

EPS **5** comprises an electric motor operatively coupled to either a steering gear or a steering column and electrically controlled by the ECU **8** based on angular position and torque of the steering column sensed by the automotive sensory system or platform **3** to apply assistive steering torque and, resultingly, provide different amounts of assistance depending on driving conditions. A normal production EPS driven by a traditional Park Assist HWTO (Hand Wheel Torque Overlay) interface on the C-CAN **6** has been modified in terms of maximum motor-vehicle speed to result in the EPS providing not only assistance to the motor-vehicle driver but also a mechatronic unit to steer the motor-vehicle in a stand-still condition.

BSM 6 represents a functional interface to realize acceleration and deceleration actions on the motor-vehicle **2.** The ECU **8** provides on the C-CAN **9** a functional channel able to be a gateway of acceleration / positive torque to the powertrain ECU (ECM) and the way to decelerate the motor-vehicle **2** by brakes. The normal production parking longitudinal interface has been modified in order to achieve technical targets of present invention. Also Dual Dry Clutch Transmission (DDCT) ECU software has been modified in order to manage the longitudinal manoeuvres from/to 0/15 km/h around to 0 Nm of engine torque in a comfortable way.

### MOTOR-VEHICLE MODEL

The Applicant has experienced that well-known dynamic models currently used for Trajectory Planning and Control for low-speed manoeuvres are undefined or ill-conditioned at low speeds. As shown to be effective in Polack et al., The Kinematic Bicycle Model: a Consistent Model for Planning Feasible Trajectories for Autonomous Vehicles, IEEE Intelligent Vehicles Symposium (IV), 2017, and Kong et al. Kinematic and dynamic vehicle models for autonomous driving control design, in 2015 IEEE Intelligent Vehicles Symposium 2015, pp. 1094-1099, the model used for low speed applications (0÷20 km/h) is the kinematic bicycle model.

### Lateral Motor-Vehicle Model

With regard to the lateral motor-vehicle model, the 4-DoF (Degree of Freedom) kinematic bicycle model is one of the simplest and well-conditioned models used in motion planning to approximate and plan the motion of a motor vehicle in the context of autonomous driving.

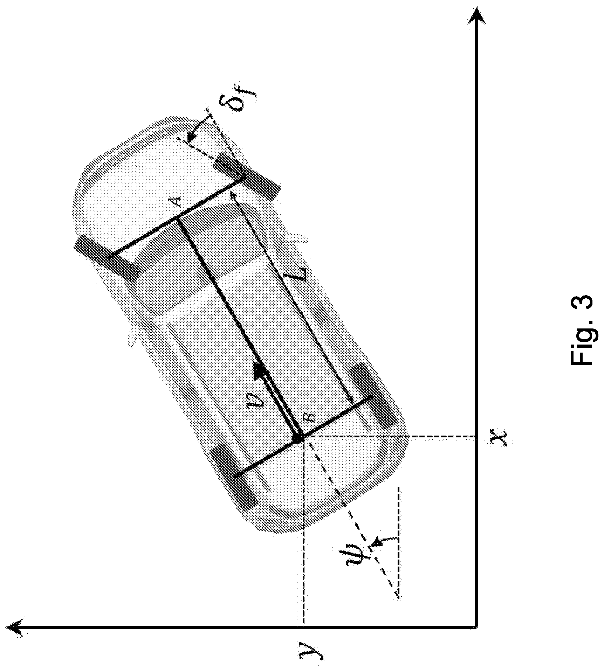

Figure 3 shows the inertial and motor-vehicle reference frames for lateral control, in which the left and right wheels are approximated with two single wheels at points A and B, respectively for the front and the rear axles.

The steering angles of the front and rear wheels are represented by *δ_{f} ∈ R* and *δᵣ ∈ R,* respectively. The model is derived assuming that the side-slip angle of the front and rear wheels are zero and only the front wheel can be steered (*δᵣ* =0). For that reason and simplicity, notation *δ = δ_{f} ∈ [δₘᵢₙ, δₘₐₓ]* will be used, where *δₘᵢₙ* and *δₘₐₓ* represent the minimum and maximum steering angles that depend on the motor-vehicle actuators.

The resulting kinematic bicycle model may be described by the following state-space equations in the inertial reference frame: $\dot{x} = v cos \left(ψ\right)$ $\dot{y} = v sin \left(ψ\right)$ $\dot{ψ} = \frac{v}{L} tan δ$ $\dot{v} = a$

In particular, *x ∈ R* and *y ∈ R* are the Cartesian coordinates of the motor-vehicle's rear wheel, while *Ψ* : = *[-π, π] ⊂ R* describes the orientation (yaw angle) of the motor vehicle, *v* := *[vₘᵢₙ, vₘₐₓ] ⊂ R* and *a* := *[aₘᵢₙ, a ₘₐₓ] ⊂ R* denote the velocity and longitudinal acceleration, respectively. Thus, the state and input vectors of this model can be defined as *X=[x,y,ψ,v]* and *U=[δ,a],* respectively.

The described kinematic model is nonlinear. An approach to efficiently solve the trajectory planning problem is to use a *"divide et impera*" approach. Firstly, the original model can be divided into longitudinal and lateral dynamics, respectively, to obtain two independent yet simpler sub-models. Moreover, a nonlinear state and input transformation can be applied to the lateral model, namely the time-state control form (T-SCF) disclosed by Sampei, M. (1994), "A control strategy for a class of non-holonomic systems - time-state control form and its application" in Proceedings of 1994 33rd IEEE Conference on Decision and Control, vol. 2, 1120-1121, and by Oyama, K. and Nonaka, K. (2013), "Model predictive parking control for non-holonomic vehicles using time-state control form", 2013 European Control Conference (ECC), 458-465. This approach results in the lateral dynamics being linearized and representable as a differential equation w.r.t. the space, namely: $\left[\begin{matrix}\frac{\partial {z}_{2}}{\partial {z}_{1}} \\ \frac{\partial {z}_{3}}{\partial {z}_{1}}\end{matrix}\right] = \left[\begin{matrix}0 & 1 \\ 0 & 0\end{matrix}\right] \left[\begin{matrix}{z}_{2} \\ {z}_{3}\end{matrix}\right] + \left[\begin{matrix}0 \\ 1\end{matrix}\right] {μ}_{2}$ where: $\begin{matrix}{z}_{1} = x & \\ {z}_{2} = y & {μ}_{2} = \frac{tan \left(δ\right)}{L {cos}^{3} \left(ψ\right)} \\ {z}_{3} = tan \left(ψ\right) & \end{matrix}$

### Longitudinal Motor-Vehicle Model

The longitudinal dynamics of the motor vehicle can be accurately approximated with a double integrator system, in which the states are the travelled distance *ξ ∈ R* and the motor-vehicle speed *v*, and the control input is the acceleration *a.* The corresponding model, whose variables are expressed in the motor-vehicle frame, results to be very simple yet accurate, and it is represented by the following system of differential equations: $\left[\begin{matrix}\frac{\partial ξ}{\partial t} \\ \frac{\partial v}{\partial t}\end{matrix}\right] = \left[\begin{matrix}0 & 1 \\ 0 & 0\end{matrix}\right] \left[\begin{matrix}ξ \\ v\end{matrix}\right] + \left[\begin{matrix}0 \\ 1\end{matrix}\right] a .$

### TRAJECTORY PLANNING DESIGN

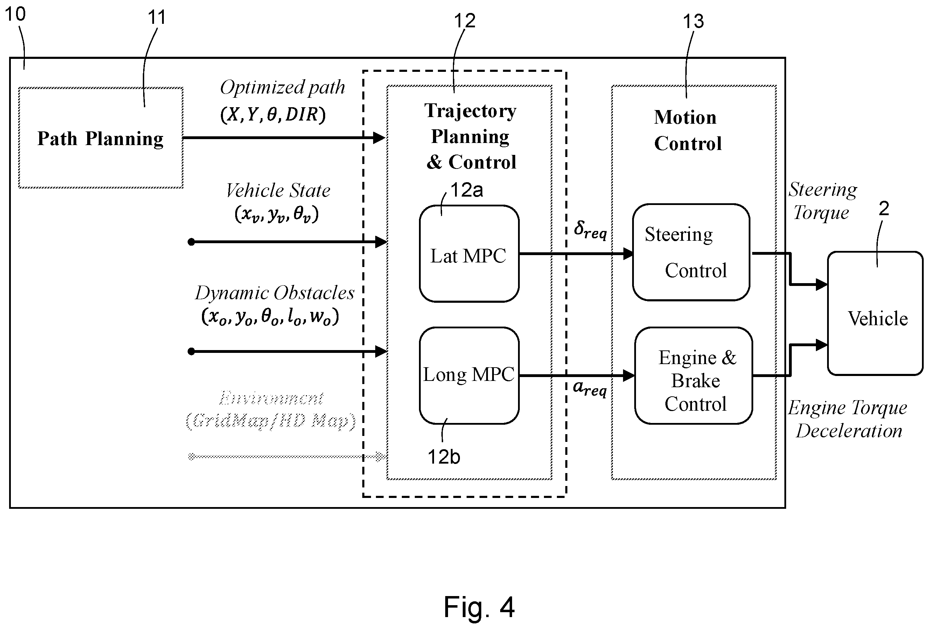

Figure 4 shows a general block diagram of a dynamics control system **10** designed to control lateral and longitudinal dynamics of the motor vehicle **2** during low-speed manoeuvres in automated driving.

The dynamics control system **10** may be entirely implemented by the ECU **8** or its implementation may be distributed among different ECUs, according to a proprietary logical architecture that the automotive manufacturer will decide to adopt.

For ease of description, in the following the dynamics control system **10** will be described to be entirely implemented by the ECU **8,** without thereby this implying any loss of generality.

The dynamics control system **10** is designed to implement a Driving Path Planner **11** designed to receive data representative of static obstacles, such as roads, buildings, etc., in the surroundings of the motor vehicle **2** and representing, in the form of, *e.g.,* a high definition road map or a binary occupancy map, static space constraints to the motion of the motor vehicle **2,** and to compute a planned driving path for the motor vehicle **2** during a low-speed manoeuvres performed in automated driving based on the positions of the static obstacles in the surroundings of the motor vehicle **2.**

In particular, the Driving Path Planner **11** is designed to compute the planned driving path within an obstacle-free or collision-free driving corridor, within which the motor vehicle **2** may be driven in automated driving without colliding with any of said static obstacles. In particular, the planned driving path is made up of waypoints which do not collide with any static objects in the environment and form a series of driving path segments each defined by respective start and end waypoints, an orientation and a driving direction referenced in an inertial (or absolute) reference frame.

In the literature several solutions have been proposed to solve the path planning problem, although most of them are limited to simulated scenarios and have not been applied to real prototypes. Within them, searches through graphs are very popular for their simplicity and effectiveness, *e.g*., by combining Voronoi decomposition diagram with path search algorithms like A*, or through explorations, *e.g*., RRT*. Other techniques include search based on point models, or search linked to kinematic models, *e.g.,* the Hybrid A* algorithm, or optimal search via non-linear MPCs.

The output of the Driving Path Planner **11** is a static path *P* := *[pi, p₂, ..., P_{N}],* that guarantees a collision-free and drivable path from the starting waypoint *p₁* to the ending waypoint *p_{N},* where the *i-th* generic waypoint *pᵢ* := *(xᵢ, yᵢ, ψᵢ, rᵢ)* and *rᵢ ∈ [0, 1]* represents the motor vehicle's motion direction, backward and forward, respectively.

The dynamics control system **10** is further designed to implement a Model Predictive Control (MPC)-based Trajectory Planner and Controller **12** designed to receive from the Driving Path Planner **11** data representative of the planned driving path of the motor vehicle **2** and to compute, based thereon, a planned lateral trajectory and a planned longitudinal trajectory of the motor vehicle **2** as a series of high-level vehicle requests for steering wheel angle and acceleration, as described in more detail in the following.

In particular, the MPC-based Trajectory Planner and Controller **12** comprises two distinct MPC-based Trajectory Planners and Controllers, a Lateral Trajectory Planner and Controller **12a** designed to plan and control the Lateral dynamics, and a Longitudinal Trajectory Planner and Controller **12b** designed to plan and control the Longitudinal dynamics.

The Lateral Trajectory Planner and Controller **12a** is designed to compute the planned lateral trajectory as a series of steering requests *δ* along the planned driving path in a motor-vehicle reference frame, and the Longitudinal Trajectory Planner and Controller **12b** is designed to compute the planned longitudinal trajectory as a series of longitudinal acceleration requests *a* of the motor vehicle **2** along the planned driving path.

Model Predictive Control (MPC) has been developed considerably over the last two decades. The main advantage of the MPC is the fact that it allows the current timeslot to be optimized while taking future time-slots into account. This is achieved by optimizing a finite time-horizon, but only implementing the first time-slot.

MPC can manage future reference profiles and constraints and anticipate control actions accordingly. These limits may be imposed on any part of the system variables, such as states, outputs, inputs, and considering main actuators characteristics and operative limitations.

The dynamics control system **10** is further designed to implement a Motion Controller 13 designed to receive from the Trajectory Planner and Controller **12** data representative of the planned lateral a longitudinal trajectories and to compute appropriate commands for the automated driving system **1,** as described in more detail in the following.

### MPC-based Lateral Trajectory Planner and Controller

Given the motor-vehicle dynamic model expressed by equation (5), the MPC-based Lateral Trajectory Planner and Controller **12a** is designed to control the motor-vehicle lateral dynamics to track the optimal path according to motor-vehicle constraints on the steering angle *δₘᵢₙ* and *δₘₐₓ* and environmental constraints on the obstacle-free driving corridor.

Applying the Tustin discretization to equation (5), it may be obtained: $\left[\begin{matrix}{z}_{2} \left(k+1\right) \\ {z}_{3} \left(k+1\right)\end{matrix}\right] = \left[\begin{matrix}1 & {Δ}_{s} \\ 0 & 1\end{matrix}\right] \left[\begin{matrix}{z}_{2} \left(k\right) \\ {z}_{3} \left(k\right)\end{matrix}\right] + \left[\begin{matrix}{Δ}_{s}^{2} / 2 \\ {Δ}_{s}\end{matrix}\right] {μ}_{2} \left(k\right)$ where Δ*ₛ* is the discretization step w.r.t. the time-state *z₁ = x,* and it is positive when the motor vehicle 2 moves forward, and negative otherwise.

The lateral control problem can be formulated as an MPC problem as follows: $\begin{matrix}J \left({z}_{2}{, z}_{3}\right) = {\left[\begin{matrix}{y}_{{ref}_{{H}_{lat}}} - {z}_{2} \left({H}_{lat}\right) \\ - {z}_{3} \left({H}_{lat}\right)\end{matrix}\right]}^{T} {Q}_{f} \left[\begin{matrix}{y}_{{ref}_{{H}_{lat}}} - {z}_{2} \left({H}_{lat}\right) \\ - {z}_{3} \left({H}_{lat}\right)\end{matrix}\right] \\ + {{\sum }_{k = 0}^{{H}_{lat} - 1} \left[\begin{matrix}{y}_{{ref}_{k}} - {z}_{2} \left(k\right) \\ - {z}_{3} \left(k\right)\end{matrix}\right]}^{T} Q \left[\begin{matrix}{y}_{{ref}_{k}} - {z}_{2} \left(k\right) \\ - {z}_{3} \left(k\right)\end{matrix}\right] + {Rμ}_{2}^{2} \left(k\right)\end{matrix}$ subject to the following constraints: ${Y}_{mink} \leq {z}_{2} \left(k\right) \leq {Y}_{maxk} ∀ k ∈ \left(0, {H}_{Lat}\right]$ $tan \left({δ}_{min}\right) \leq Γ \left({z}_{3}, {μ}_{2}\right) \leq tan \left({δ}_{max}\right)$ where *Hₗₐₜ ∈N* is the prediction horizon, and *y_{refk} ∈ R*^{*Hlat*+*1*} is the centerline of the left and right free-spaces *Yₘₐₓₖ ∈ R^{Hlat+1}* and *Yₘᵢₙₖ ∈ R^{Hlat+1}*. They are obtained by discretizing by Δₛ the segments that connect the path planning waypoints. The combination of these two vectors is generally referred to as the free corridor of the Trajectory Planning. Moreover, *Γ*(.,.) is the linear approximation of: $Γ \left({z}_{3}, {μ}_{2}\right) = {lcos}^{3} \left({tan}^{- 1}\left({z}_{3}\right)\right) {μ}_{2}$ obtained through a first-order Taylor expansion of *Γ*(.,.), that is defined to include the constraint on the steering angle (*δₘᵢₙ* ≤ *δ* ≤ *δₘₐₓ*) in the transformed system.

Preliminarily, it is worth mentioning that in equation (8) variables *x, y* are used to represent the position of the motor vehicle **2** in a conveniently roto-translated frame. Generally speaking, the MPC problem could be solved in the motor-vehicle coordinate system. However, the time-state control form (T-SCF) disclosed by Sampei (1994) introduces singularities and strongly limits the prediction horizon. To obtain better performance, an *ad-hoc* roto-translation of the reference frames and the lateral constraints, obtained as a translation w.r.t. the motor-vehicle position and a rotation of an angle *θ_{Rot}* could be applied. The choice of this angle has significant effects on the performance of the MPC.

Equation (8) shows the formulation of the Trajectory Planning as an MPC-based problem that focuses only on the lateral control of the motor vehicle. Since it is designed as a linear optimization problem, it turns out that the solution can be computed efficiently and guarantees a deviation from the reference path that shrinks to zero over the time-steps. However, this approach has two well-known limitations, namely:
- the T-SCF-based model introduces singularities in *ψ* = ±π/2 and then must work in the range -π/2 < *ψ* < *π*/2,
- there is a linearization error, despite small, related to the first-order approximation of *Γ(z₃, µ₂).*

Thus, the applications of this method seems to be dramatically limited to the scenarios in which each turn is less than *π*/2.

A solution to this problem is proposed in the aforementioned WO 2021/079338 A1 to the present Applicant and provides for rotating the planned path in the motor-vehicle reference frame in order to manage cases in which the motor vehicle has to follow tight turns, thus avoiding singularities.

In particular, in the solution proposed in WO 2021/079338 A1, assuming that at a certain time-step *k* the motor vehicle is located at the *iₜₕ* segment of the planned driving path, which is defined as a straight line linking two consecutive waypoints, then the problem of the singularities can be addressed by dynamically determining a rotation angle *θ_{Rot},* defined as a linear interpolation of the orientations *θᵢ* and *θᵢ₊₁* of the *iₜₕ* segment and of the next one *iₜₕ₊₁.* This solution also provides for a combination of this rotation angle with another one, computed over the successive segment, namely *θᵢ₊₂,* eventually weighting it by a "corrective factor" *W ∈R.*

Although this approach allows to efficiently solve the lateral MPC problem while reducing the effects linked to the singularities, it considers only few consecutive waypoints, thus potentially obtaining a myopic predictive controller. An empirical solution to this problem could be to down-sample as much as possible the number of waypoints provided by the path planning. In this way, the length of each segment is maximized, with a consequent maximization of the range of view of the MPC, but worsening the approximation of the trajectory to be performed.

This problem is overcome by improving and optimizing the dynamic choice of the three orientations used in the computation of *θ_{Rot},* and thus optimizing and maximizing the path section used for the prediction in the MPC and avoids unnecessary rotations.

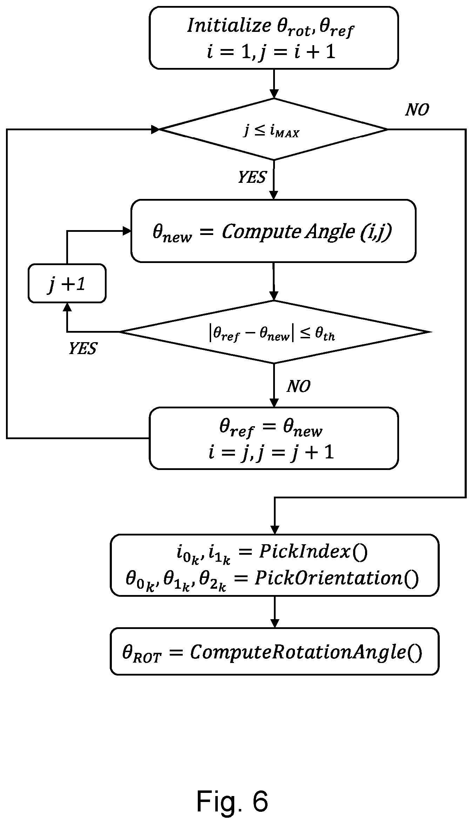

With reference to Figure 6, which shows a flowchart of an algorithm of rotation angle *θ_{Rot}* optimization, starting from the first segment and taking the segment orientation as reference *θ_{ref},* the MPC-based Lateral Trajectory Planner and Controller **12a** is designed to compute and store in *Θ_{OUT}* the last orientation of the equivalent segment created between the first waypoint and the next ones that satisfies the condition |*θ_{ref} - θ_{new}*| ≤ *θₜₕ,* where *θₜₕ* is a user-settable threshold lower than *π*/*2*.

The obtained segment orientation is then used as a new reference *θ_{ref},* and the process repeats until the last waypoint is reached. Then, at each time-step *k*, the functions *PickIndex* and *PickOrientation,* given the index *iₖ* of the segment where the motor-vehicle is located, extract the information necessary to compute the rotation angle at that time, through the formula: ${θ}_{{Rot}_{k}} = W \frac{\left({θ}_{{2}_{k}}-{θ}_{{1}_{k}}\right) {d}_{k}}{{d}_{{1 , 0}_{k}}} + \frac{\left({θ}_{{1}_{k}}-{θ}_{{Rot}_{k - 1}}\right) {d}_{k}}{{d}_{{1 , 0}_{k}}} + {θ}_{{Rot}_{k - 1}}$ where:
*dₖ* is the Euclidean distance at time-step *k* between the current position of the motor-vehicle (the motor-vehicle rear center axle) and the end waypoint of the driving path segment *iₖ* containing the current position of the motor-vehicle,
*d*_{1,0*ₖ*} is the distance between the end waypoint of the driving path segment *iₖ* containing the current position of the motor-vehicle and the end waypoint of the next driving path segment following the one containing the current position of the motor-vehicle, and *θ*_{1*ₖ*} and *θ*_{2*ₖ*} are the first two orientations of *Θ_{OUT}* w.r.t. *iₖ.*

The algorithm of the rotation angle *θ_{Rot}* optimization is reproduced here below for the sake of completeness.

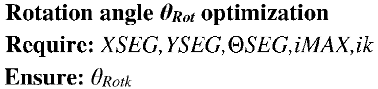

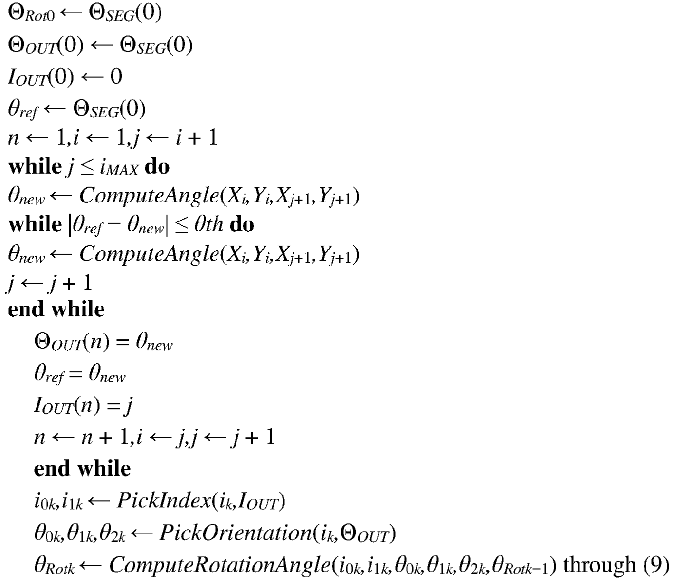

With reference to the algorithm above, *X_{SEG}* and *Y_{SEG}* are vectors containing the waypoints (*xᵢ, yᵢ*) provided by the higher level path planning module. Moreover, *Θ_{SEG}* is the vector of orientations of the segments derived from these waypoints, and *iₖ* is the segment i in which the motor vehicle is located at that time. Finally, *i_{MAX}* represents a stopping iteration condition, that can for example take into account the end of the trajectory or a change in the direction of motion.

Therefore, in less mathematical terms, the Lateral Trajectory Planner and Controller **12a** is designed to compute the rotation angles *θ_{ROT}* of which the motor-vehicle reference frame is to be rotated relative to the inertial reference frame along the planned driving path by:
- computing an equivalent driving path which approximates/simplifies the planned driving path in terms of waypoints and orientation while maintaining the same destination and is made up of a series of equivalent driving path segments, wherein:
   ∘ an equivalent driving path segment is computed to extend from a start waypoint of a planned driving path segment and an end waypoint of either the same or a different planned driving path segment along the planned driving path;
   ∘ an equivalent driving path segment is therefore defined by (the coordinates *xᵢ, yᵢ*) of the start and end waypoints of the planned driving path segment(s) between which the equivalent driving path segment extends, an equivalent orientation *θ* and a driving direction referenced in the inertial reference frame; and
   ∘ the end waypoint of an equivalent driving path segment is computed as the end waypoint of the last planned driving path segment that causes the equivalent orientation of the equivalent driving path segment relative to the equivalent orientation of the preceding equivalent driving path segment to be lower than the given amount; and
- computing the rotation angles *θ_{ROT}* of which the motor-vehicle reference frame is to be rotated relative to the inertial reference frame along the planned driving path based on the computed equivalent driving path, in particular based on:
   ∘ the computed equivalent orientation *θ*₀ of the equivalent driving path segment extending between planned driving path segments including the planned driving path segment *iₖ*; and
   ∘ the computed equivalent orientation(s) *θ*₁, *θ*₂ of one or more of the next equivalent driving path segments, conveniently the two next equivalent driving path segments, namely the equivalent driving path segments following the equivalent driving path segment extending between planned driving path segments including the planned driving path segment *iₖ.*

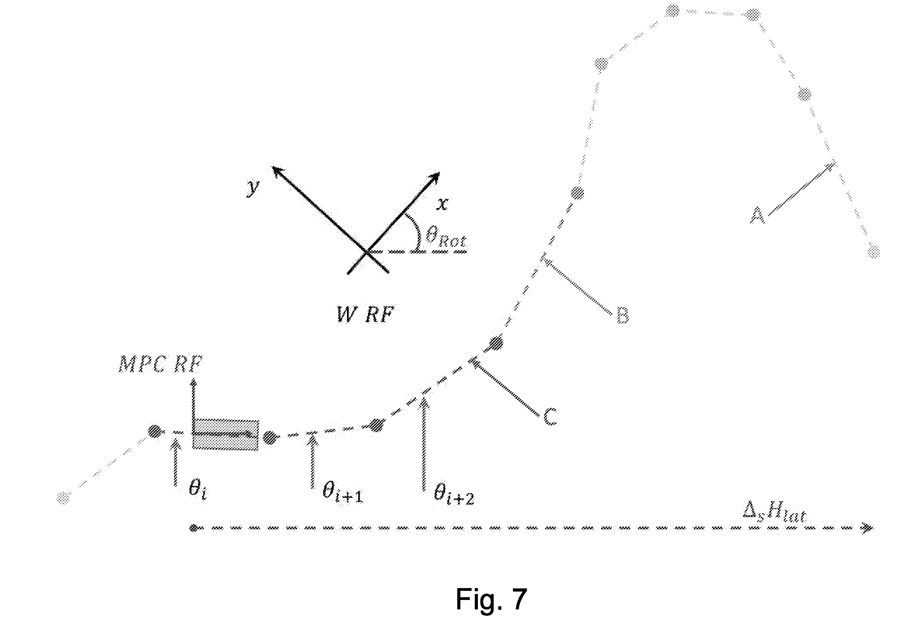

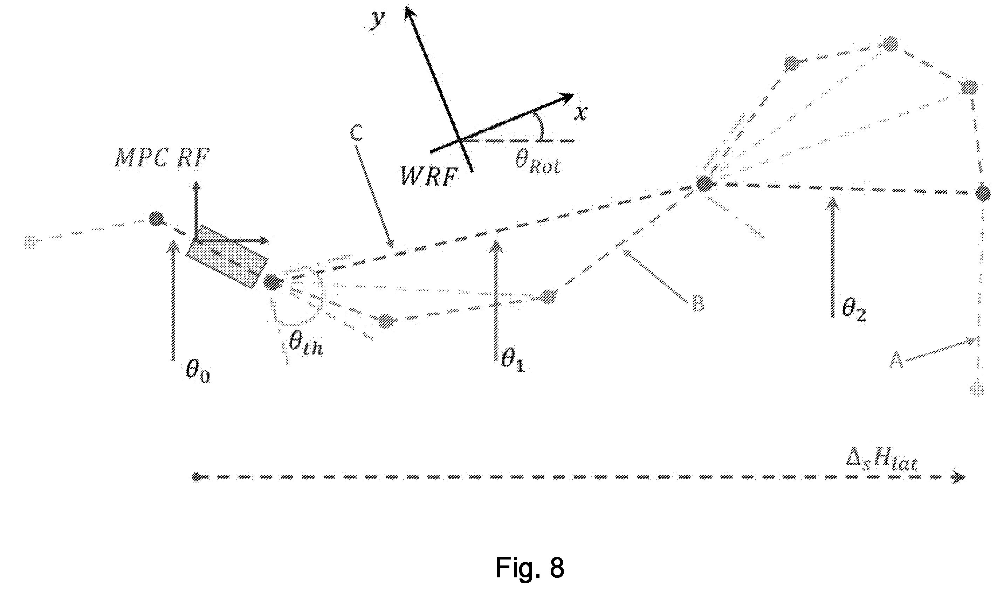

Figures 7 and 8 comparatively show the choices of segment orientation according to WO 2021/079338 A1 to the present Applicant and to the rotation angle *θ_{Rot}* optimization disclosed above, respectively. In particular, in Figures 7 and 8, the light grey waypoints represent the waypoints delimiting the planned driving path segments; the light grey dashed lines, denoted with reference letter A, represent the planned driving segments; the dark grey dashed lines, denoted with reference letter B, represent the planned driving segments exploitable in the MPC horizon; the darker grey dashed lines, denoted with reference letter C, represent equivalent driving path segments that establish *θ₀, θ₁* and *θ₂* and the light grey cone forms the angle *θₜₕ.*

The rotation angle *θ_{Rot}* optimization solves the problem of the singularities without limiting the number of segments to take into account. The proposed approach provides two main benefits, *i.e.,* i) it maximizes the prediction horizon that the MPC can use, and ii) it allows arbitrary dense path as inputs, with a significant improvement in the trajectory accuracy.

Although the rotation angle *θ_{Rot}* resulting from the proposed algorithm is bounded by construction, for the sake of practical applications, it could be convenient to apply an additional saturation to equation (9) to increase comfort. It can be expressed as follows: ${θ}_{{Rot}_{k}} = max \left(\left({θ}_{{0}_{k}}-{θ}_{SAT}\right),min\left(\left({θ}_{{0}_{k}}+{θ}_{SAT}\right), {θ}_{{Rot}_{k}}\right)\right)$ where *θ_{SAT}* is the saturation angle w.r.t. the current orientation *θ*₀*_{ₖ},* and its value depends on the particular application.

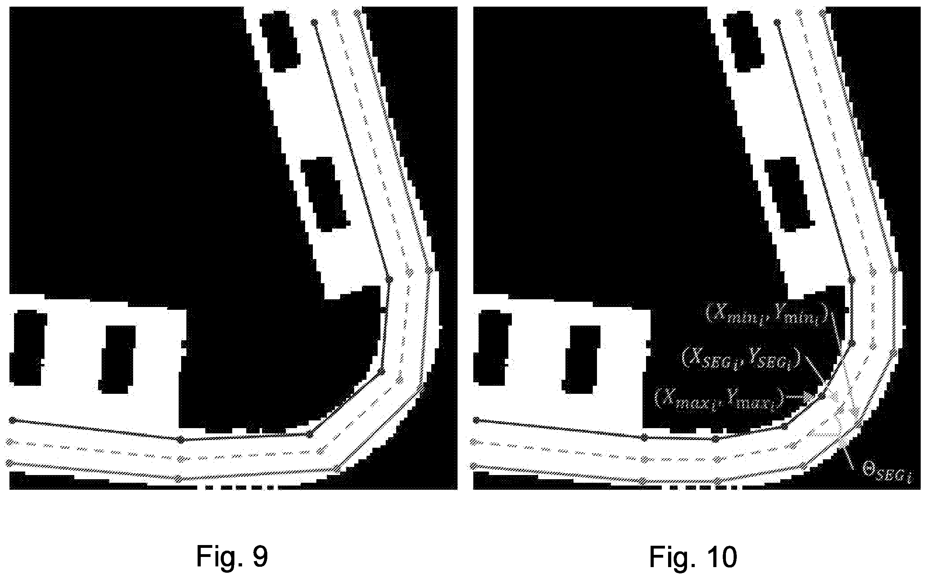

Figures 9 and 10 comparatively show the *ad hoc* free-corridors constructed according to WO 2021/079338 A1 to the present Applicant and to the rotation angle *θ_{Rot}* optimization disclosed above, respectively, where *X_{SEG}* and *Y_{SEG}* shown in Figure 10 are vectors containing the waypoints (*xᵢ, yᵢ*) provided by the higher level path planning module, i.e. the Driving Path Planner **11.** A free-corridor is the area inside which the vehicle has to be during the maneuver. Each of the free-corridors of Figures 9 and 10 is depicted as delimited between two broken lines, which approximate a curve to be travelled by the motor vehicle **2.**

With reference to Figure 10, the outer broken lines (right broken line) is defined by the two vectors *Xₘᵢₙ* and *Yₘᵢₙ* and the inner broken line (left broken line) is defined by the vectors *Xₘₐₓ* and *Yₘₐₓ.* The waypoints contained in vectors *X_{SEG}* and *Y_{SEG}* are enclosed in the free-corridor. Vector *Θ_{SEG}* is the one containing the orientations of the segments derived from these waypoints.

Vectors *Yₘᵢₙ* and *Yₘₐₓ* represent the bounds of the free-corridor for the lateral dynamics of the motor vehicle **2** while vectors *Xₘᵢₙ* and *Xₘₐₓ* represent the boundaries of the free-corridor for the longitudinal dynamics of the motor vehicle **2.** The proper creation of vectors *Yₘᵢₙ* and *Yₘₐₓ* is crucial in the performance of the lateral MPC.

As already discussed above, the output of the Driving Path Planner **11** is a static path P comprising a plurality of waypoints. Preferably, the waypoints of the path P are first pre-processed in order to be effectively used to create a drivable trajectory. Particularly, the MPC-based Trajectory Planner and Controller **12** is configured to firstly apply a resampling to path P to reduce the number of the waypoints so as to take only the those necessary, based on a trade-off between accuracy in approximation of the path and dimensions of the vector that will then be used by the MPC. The outputs of this step are vectors *X_{SEG}, Y_{SEG}* and *Θ_{SEG}.* Afterwards, leveraging such vectors, the MPC-based Trajectory Planner and Controller **12** computes the free-corridor.

In particular, the Lateral Trajectory Planner and Controller **12a** is designed to compute the free-corridor by computing, for each waypoint of the path P, a pair of corridor segments, i.e. left and right segments, which are parallel to the segment associated to said waypoint, i.e. the segment starting with said waypoint, and are located at a same user-settable distance from said segment on opposite sides of it.

In more details, the computing of the pair corridor segments comprises the following steps:
- for each waypoint of the path P, computing a line perpendicular to the segment associated to the waypoint, i.e. the segment starting with the waypoint;
- on each perpendicular line, finding two points located at the user-settable distance from the segment on opposite sides of it; and
- computing the corridor segments as those parallel to the segment associated to the waypoint and passing, each, through a respective one of the two points.

At this point, the computing of the free corridor comprises the following further steps:
- finding the intersection point between two consecutive corridor segments; and
- saving the resulting intersection points in the vectors *Yₘᵢₙ* and *Yₘₐₓ,* particularly the intersection points generated by the consecutive corridor segments on the right of the path P are saved in vector *Yₘᵢₙ* and the intersection points generated by the consecutive corridor segments on the right of the path P are saved in vector *Yₘₐₓ.*

Thus, the intersection points collected in the vectors *Yₘᵢₙ* and *Yₘₐₓ* defines the two (left and right) boundaries of the free corridor along the lateral direction.

The free-corridor determined as disclosed above is a static corridor with respect to the motor-vehicle reference frame. Therefore the free-corridor will be roto-translated with respect to the inertial reference frame, said roto-translation comprises a rotation according to the rotation angle *θ_{Rot}.*

In general, the free corridor is made up of two series of consecutive corridor segments and each of the two series of consecutive corridor segments is a segmented line defining a respective boundary line of the free corridor.

It is worth to note that equation (8) controls only the centre point of the rear axle of the motor vehicle **2,** without taking into account its overall dimensions in terms of length and width. Moreover, the higher level path planning module, i.e. the Driving Path Planner **11,** typically provides a path P without performing a proper collision check along the whole dimensions of the motor vehicle **2.** Consequently, there could be the possibility that the free corridor generated by the MPC-based Trajectory Planner and Controller **12** leads to unsafe or unfeasible trajectories.

The MPC-based Trajectory Planner and Controller **12** receives static information about the environment from the Driving Path Planner **11.** Said static information about the environment, such as roads, buildings, are available to the MPC-based Trajectory Planner and Controller **12** in the form of, e.g., a high definition road map or a binary occupancy map or a grid map. In order to improve the safety of the motor vehicle **2,** the MPC-based Lateral Trajectory Planner and Controller **12a** is designed to real-time modify boundaries of the free corridor by leveraging the MPC prediction which can virtually anticipate possible dangerous situations along the path P, e.g. the next curve or a possible obstacle or a sudden narrowing of the road.

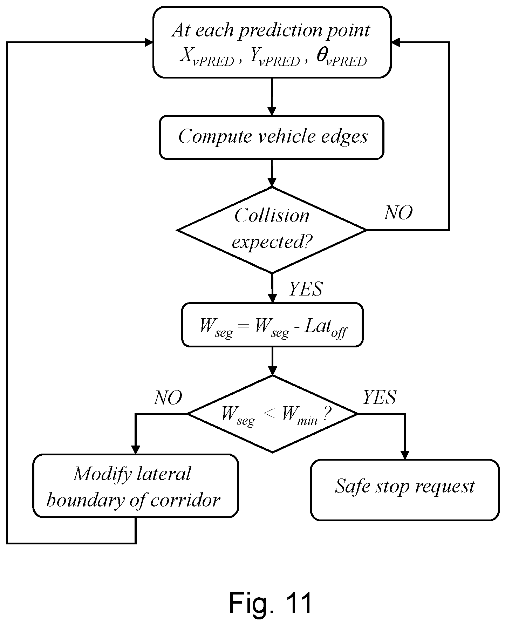

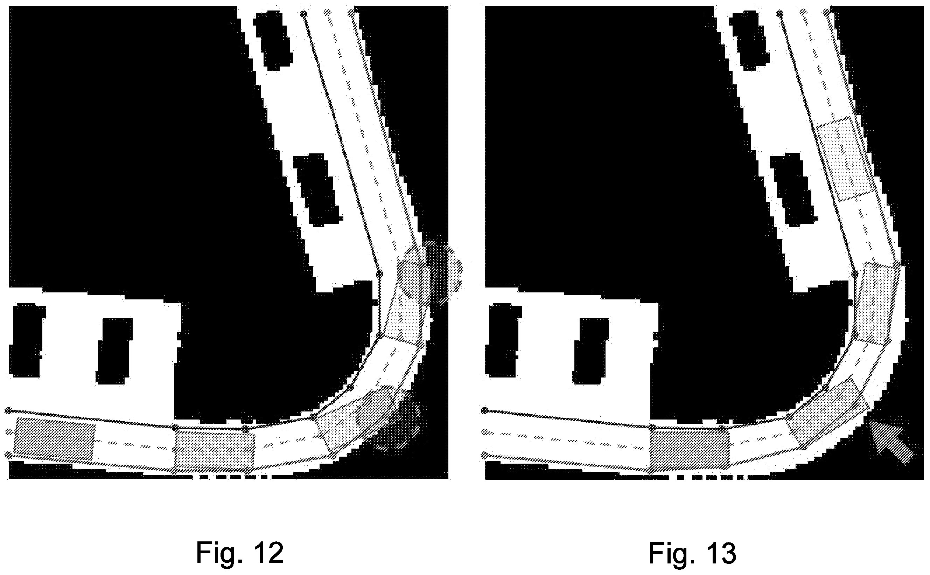

The MPC-based Lateral Trajectory Planner and Controller **12a** is designed to perform an algorithm for real-time modifying boundaries of the free-corridor, a flow chart of which is shown in Figure 11. Two step of the algorithm are show with a graphical example in Figures 12 and 13. With particular reference to Figures 11-13, the MPC-based Lateral Trajectory Planner and Controller **12a** is designed to real-time modifying boundaries of the free corridor by at least one of the following steps.

At each time-step (*tₖ*), i.e at each prediction point, the MPC-based Lateral Trajectory Planner and Controller **12a** outputs a prediction of the state of the motor vehicle **2** in terms of position, indicated with *X_{vPRED}* and *Y_{vPRED}* in Figure 11, and of orientation, indicated with *θ_{vPRED}* in Figure 11.

Estimated four edges or corners of the motor vehicle **2** are computed on the basis of prediction of the state of the motor vehicle **2,** i.e. on the basis of position and orientation of the motor vehicle **2** along the entire prediction.

For each estimated edge of the motor vehicle **2,** it is checked whether the estimated edge would collide to fixed obstacle, i.e. whether the estimated edge would go beyond the limits of the lane or overlap in areas where there are fixed obstacles, e.g. walls (the situation shown in Figure 12 with dashed line circles), on the basis of the data representative of obstacles and space constraints.

If a collision between an estimated edge and an obstacles is expected, then the distance *W_{seg}* between corresponding corridor segments of the free corridor (*Yₘₐₓ, Yₘᵢₙ*) is reduced by a lateral offset *Lat_{off}* (the situation shown in Figure 13). The distance *W_{seg}* is progressively reduced by the lateral offset *Lat_{off}* at each time-step until a collision is no longer expected. In other words, the modification of the boundaries of the free corridor consist in a free corridor narrowing.

Nevertheless, if the remaining space in the free corridor is no longer sufficient to allow the vehicle to pass, because the distance *W_{seg}* is lower than a minimum distance *Wₘᵢₙ,* then the lateral boundaries of free corridor are modified (reduced) and a "safe stop" of the motor vehicle **2** is requested to MPC-based Longitudinal Trajectory Planner and Controller **12b.** In particular, the safe stop request is a stop condition request which consists in changing the value of a parameter *ξ_{Corridor}* from its default value to a value that guarantees a safe stop before the narrow passage. The parameter *ξ_{Corridor}* takes into account the width of the road where the motor vehicle **2** is travelling and it is used by the MPC-based Longitudinal Trajectory Planner and Controller **12b** to determines the maximum value *ξₘₐₓ* of the travelled distance which actually causes the stop of the motor vehicle **2,** as it will be explained in more details in the following.

### MPC-based Longitudinal Trajectory Planner and Controller

Like the MPC-based Lateral Trajectory Planner and Controller **12a,** also for MPC-based Longitudinal Trajectory Planner and Controller **12b** the control technique is the linear MPC. This allows speed reference and obstacle tracking to be managed in a single integrated approach.

On the same stream of equation (7), the longitudinal dynamics expressed by equation (6) can be discretized leveraging the Tustin rule, obtaining the following discrete-time longitudinal model: $\left[\begin{matrix}ξ \left(k+1\right) \\ υ \left(k+1\right)\end{matrix}\right] = \left[\begin{matrix}1 & {Δ}_{t} \\ 0 & 1\end{matrix}\right] \left[\begin{matrix}ξ \left(k\right) \\ υ \left(k\right)\end{matrix}\right] + \left[\begin{matrix}{Δ}_{t}^{2} / 2 \\ {Δ}_{t}\end{matrix}\right] a \left(k\right)$ where:
*ξ* is the longitudinal position of the motor-vehicle from the start of the planned driving path,
*v* is the longitudinal speed, and
Δₜ ∈ R is the discretization step w.r.t. time.

The MPC-based Trajectory Planning problem for the longitudinal control can be then formulated as: $J \left(ξ, ν\right) \begin{matrix}= {\left[\begin{matrix}{ξ}_{{ref}_{{H}_{long}}} - ξ \left({H}_{long}\right) \\ {υ}_{{ref}_{{H}_{long}}} - υ \left({H}_{long}\right)\end{matrix}\right]}^{T} {Q}_{f} \left[\begin{matrix}{ξ}_{{ref}_{{H}_{long}}} - ξ \left({H}_{long}\right) \\ {υ}_{{ref}_{{H}_{long}}} - υ \left({H}_{long}\right)\end{matrix}\right] \\ + {\sum }_{k = 0}^{{H}_{long} - 1} {\left[\begin{matrix}{ξ}_{{ref}_{k}} - ξ \left(k\right) \\ {υ}_{{ref}_{k}} - υ \left(k\right)\end{matrix}\right]}^{T} Q \left[\begin{matrix}{ξ}_{{ref}_{k}} - ξ \left(k\right) \\ {υ}_{{ref}_{k}} - υ \left(k\right)\end{matrix}\right] + R {a}^{2} \left(k\right)\end{matrix}$ subject to the following constraints: ${ξ}_{mink} \leq ξ \left(k\right) \leq {ξ}_{maxk} ∀ k ∈ \left(0, {H}_{Long}\right]$ ${ν}_{min} \leq ν \left(k\right) \leq {ν}_{max}$ ${a}_{min} \leq a \left(k\right) \leq {a}_{max}$ ${j}_{min} {Δ}_{t} \leq a \left(k\right) - a \left(k-1\right) \leq {j}_{max} {Δ}_{t}$
where H_{Long} is the prediction horizon,
jₘᵢₙ and jₘₐₓ are minimum and maximum allowed jerks, and
v_{refk} is the motor vehicle speed reference.

The reference on the travelled distance ξ_{refk} acts as an integral action to handle stationary errors due to exogenous disturbances and/or inaccuracies in the motion control module. It is obtained through as: ${ξ}_{refk} = \left({D}_{ref}-{D}_{meas}\right) + {ν}_{refk} Δ tk , tk$ where: ${D}_{ref} = X {ν}_{ref} \left(i\right) Δ t i = {t}_{0}$

In equation (12), *Dₘₑₐₛ* is the measured travelled distance (from sensors), *D_{ref}* is the expected travelled distance computed from the longitudinal control activation time (*t*₀) to the current time step (*tₖ*)*.* Moreover, *ξₘₐₓ* determines the maximum value of the travelled distance *ξ_{Goal},* and, whenever reached, it constrains the motor vehicle to stop.

It is further exploited the constraint of the maximum travelled distance in order to take into account the different stop condition requests that could come from the MPC-based Lateral Trajectory Planner and Controller **12a,** obtaining: ${ξ}_{maxk} = min \left({ξ}_{Goal}, {ξ}_{Corridor}, {ξ}_{Obstacle}\right)$

Thus, the stop condition takes into account the goal position (*ξ_{Goal}*), dynamic objects (*ξ_{Obstacle}*) and the availability of a sufficiently large road (*ξ_{Corridor}*) and takes the minimum of those stop conditions. As anticipated above, parameter *ξ_{Corridor}* can be modified during the execution of the algorithm for the real-time modifying of the boundaries of the free-corridor performed by the MPC-based Lateral Trajectory Planner and Controller **12a.**

### Motion Controller

The previously-described motor-vehicle models assume that the control inputs, i.e., the series of steering requests δ and the series of longitudinal acceleration requests a, can be directly controlled. However, low level controllers are needed to transform this control inputs into physical signals for the actuators. In detail, the steering angle control is realized by using the EPS torque interface available on the CAN. Similarly, the motor-vehicle longitudinal motion is controlled by means of acceleration/deceleration requests to the braking system through normal production Adaptive Cruise Control interface.

### Steering Control

The EPS low level control loop has been designed by using a state feedback controller comprising:
- a linear time invariant Kalman observer that filters/estimates the system states, useful also to estimate driver hands on the steering wheel, and
- an optimal linear quadratic integral controller able to track the steering wheel angle reference from MPC-based Lateral Trajectory Planner and Controller **12a.**

Further details about a model-based development and related practical considerations may be found in Raffone E. (2016) A Reduced Order Steering State Observer for Automated Steering Control Functions, Proceedings of the 13^{th} Int. Conf. on Informatics in Control, Automation and Robotics, Lisbon, Portugal.

### Longitudinal Acceleration Control

Conversely to the steering control, the longitudinal acceleration control is managed by multiple actuations (e.g., engine, electric motor, gear-box, and braking), hence the interfaces can change according to the motor-vehicle architecture, actuator controls, and their integration.

In this case, a motor-vehicle is faced in which the motor-vehicle interfaces, for longitudinal dynamic control, are:
- engine-torque request: delivered to Engine Control (*T_{reqs}*)
- deceleration request: delivered to Braking System (*a_{reqs}*)

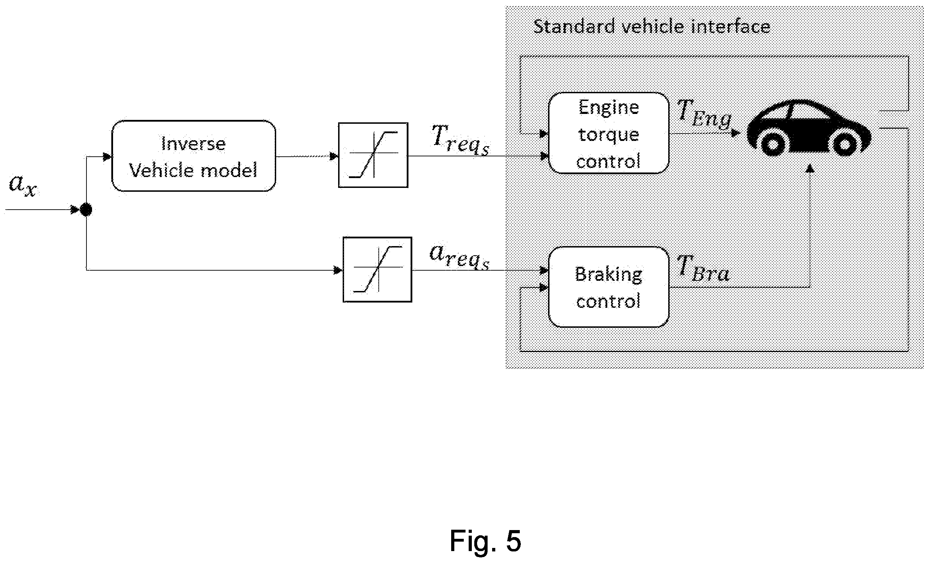

With the aim to keep the control architecture simply and easy to tune, no further feedback control loop is introduced at this level. Therefore, the longitudinal acceleration control is implemented by means of the structure shown in Figure 5.

The command *aₓ* is split in two channels, one for each interface. The Braking System includes a deceleration closed loop that allows to accept directly deceleration command (*a_{reqs}*) and to generate a braking torque *T_{bra}.* The Engine Control performs a closed-loop control based on an estimation of applied engine torque *T_{Eng}.* To match the available interface it has been implemented an inverse vehicle model, to convert *aₓ* in *T_{reqs},* which considers the current motor-vehicle configuration (e.g., gear ratio, inertia, friction) and mainly exogenous input (e.g. road slope, drag forces).

## Claims

1. An automotive electronic dynamics control system (**10**) for a motor-vehicle (**2**) equipped with an automotive automated driving system (**1**) designed to cause the motor-vehicle (**2**) to perform low-speed manoeuvres in automated driving;
the automotive automated driving system (**1**) comprising:
- an automotive sensory system (**3**) designed to sense motor-vehicle-related quantities, and
- automotive actuators (**4**) comprising an Electric Power Steering **(5),** a Braking System **(6),** and a Powertrain **(7);**
the automotive electronic dynamics control system (**10**) is designed to implement:
- a Driving Path Planner (**11**) designed to:
∘ receive data representative of obstacles in the surroundings of the motor-vehicle (**2**) and representing static space constraints to the motion of the motor-vehicle **(2),** and
∘ compute, based on the received data, a planned driving path made up of a series of driving path segments each defined by respective start and end waypoints and an orientation (*θᵢ*) thereof referenced in an inertial reference frame;
- a Model Predictive Control (MPC)-based Trajectory Planner and Controller (12) designed to:
∘ receive from the Driving Path Planner (**11**) data representative of the planned driving path and from the automotive sensory system (**3**) data representative of positions and orientations of the motor-vehicle (**2**) and of dynamic obstacles in the surroundings of the motor-vehicle (**2**) and representing dynamic space constraints to the motion of the motor-vehicle **(2),** and
∘ compute, based on the received data, a planned lateral trajectory and a planned longitudinal trajectory for the motor-vehicle (**2**) during the low-speed manoeuvre performed in automated driving; and
- a Motion Controller (**13**) designed to:
∘ receive from the Trajectory Planner and Controller (**12**) data representative of the planned lateral and longitudinal trajectories, and
∘ compute commands for the Electric Power Steering (**5**) based on the planned lateral trajectory, and for the Braking System (**6**) and the Powertrain (**7**) based on the planned longitudinal trajectory;
the MPC-based Trajectory Planner and Controller (**12**) comprising:
- an MPC-based Lateral Trajectory Planner and Controller (**12a**) designed to compute the planned lateral trajectory as a series of steering requests (*δ*) referenced in a motor-vehicle reference frame; and
- an MPC-based Longitudinal Trajectory Planner and Controller (**12b**) designed to compute the planned longitudinal trajectory as a series of longitudinal acceleration requests (*a*);
wherein the Lateral Trajectory Planner and Controller (**12a**) is further designed to:
- output a prediction of the state of the motor vehicle (**2**) in terms of position (*X_{vPRED}, Y_{vPRED}*) and orientation (*θ_{vPRED}*);
the automotive electronic dynamics control system being **characterized in that** the Lateral Trajectory Planner and Controller (12a) is designed to
- compute an obstacle-free driving corridor, within which the motor-vehicle (**2**) may be driven in automated driving without colliding with any of the obstacles, on the basis of the planned driving path so as to define the obstacle-free driving corridor as two series of consecutive corridor segments, each of the two series of consecutive corridor segments defining a respective boundary of the free corridor; and
- real-time modify boundaries of the free corridor on the basis of the prediction of the state of the motor vehicle (**2**) in order to avoid the motor vehicle (2) collides with an obstacle, by:
- computing estimated four edges or corners of the motor vehicle **2** on the basis of said prediction of the state of the motor vehicle **(2);**
- for each estimated edge of the motor vehicle (2), checking whether the estimated edge would collide to an obstacle on the basis of said data representative of obstacles in the surroundings of the motor-vehicle **(2);**
- if a collision between an estimated edge of the motor vehicle (**2**) and an obstacle is expected, then a distance (*W_{seg}*) between corresponding corridor segments of the free corridor (*Yₘₐₓ, Yₘᵢₙ*) is reduced by an lateral offset (*Lat_{off}*); and
- progressively reducing said distance (*W_{seg}*) at each time-step until a collision is no longer expected.

2. The automotive electronic dynamics control system (**1**) of claim 1, wherein the Lateral Trajectory Planner and Controller (**12a**) is designed to request to the MPC-based Longitudinal Trajectory Planner and Controller (**12b**) a safe stop of the motor vehicle (**2**) when the distance (*W_{seg}*) is lower than a minimum distance (*Wₘᵢₙ*)*.*

3. The automotive electronic dynamics control system (**1**) of claim 2, wherein the request of safe stop consists in changing the value of a first constraint (*ξ_{Corridor}*)*,* which takes into account the width of a road where the motor vehicle (**2**) is travelling, and the MPC-based Longitudinal Trajectory Planner and Controller (**12b**) is further designed to determine the maximum value of the travelled distance (*ξₘₐₓₖ*) of the motor vehicle (2) as: ${ξ}_{maxk} = min \left({ξ}_{Goal}, {ξ}_{Corridor}, {ξ}_{Obstacle}\right) ,$ where:
*k* denotes the time computation step;
*ξ_{Goal}* is a second constraint which takes into account a goal position of the motor vehicle (2);
*ξ_{Corridor}* is the first constraint;
*ξ_{Obstacle}* is a third constraint which take into account dynamic objects.

4. The automotive electronic dynamics control system (**1**) of any of the preceding claims, wherein the Lateral Trajectory Planner and Controller (**12a**) is further designed to dynamically modify orientation (*θ_{ROT}*) of the motor-vehicle reference frame relative to the inertial reference frame along the planned driving path to cause relative orientations of all of the couples of successive driving path segments of the planned driving path to be lower than a given amount.

5. The automotive electronic dynamics control system (**1**) of any of the preceding claims, wherein the Lateral Trajectory Planner and Controller (**12a**) is further designed to compute in the inertial reference frame rotation angles (*θ_{ROT}*) of which the motor-vehicle reference frame is to be rotated relative to the inertial reference frame along the planned driving path.

6. The automotive electronic dynamics control system (**1**) of any of the preceding claims, wherein the Lateral Trajectory Planner and Controller (**12a**) is further designed to compute the planned lateral trajectory based on a linearized Model which exhibits a representation singularity whenever the relative orientation of a couple of successive driving path segments of the planned driving path is equal to or higher than a given amount.

## Patentansprüche

1. Elektronisches Fahrzeugdynamiksteuersystem (**10**) für ein Kraftfahrzeug (**2**), das mit einem automatisierten Fahrzeugfahrsystem (**1**) ausgestattet ist, das dazu ausgelegt ist, das Kraftfahrzeug (**2**) dazu zu veranlassen, Manöver bei niedriger Geschwindigkeit im automatisierten Fahrbetrieb auszuführen; wobei das automatisierte Fahrzeugfahrsystem (**1**) Folgendes umfasst:
- ein Fahrzeugsensorsystem (**3**), das zur Erfassung von kraftfahrzeugbezogenen Größen ausgelegt ist, und
- Fahrzeugaktuatoren (**4**), die eine elektrische Servolenkung (**5**), ein Bremssystem (**6**) und einen Antriebsstrang (**7**) umfassen;
das elektronische Fahrzeugdynamiksteuersystem (**10**) ist ausgelegt, um Folgendes zu implementieren:
- einen Fahrwegplaner (**11**), der ausgelegt wurde, um:
○ Daten zu empfangen, die für Hindernisse in der Umgebung des Kraftfahrzeugs (**2**) repräsentativ sind und statische Raumeinschränkungen für die Bewegung des Kraftfahrzeugs (**2**) darstellen, und
∘ auf der Grundlage der empfangenen Daten einen geplanten Fahrweg zu berechnen, der aus einer Reihe von Fahrwegsegmenten besteht, die jeweils durch jeweilige Start- und Endwegpunkte und eine Orientierung (*θᵢ*) davon definiert sind, die in einem Trägheitsbezugsrahmen referenziert werden;
- einen auf modellprädiktiver Regelung (MPC)-basierenden Trajektorienplaner und -regler (**12**), der ausgelegt wurde, um:
∘ vom Fahrwegplaner (**11**) Daten, die für den geplanten Fahrweg repräsentativ sind, und vom Fahrzeugsensorsystem (**3**) Daten, die für Positionen und Orientierungen des Kraftfahrzeugs (**2**) und für dynamische Hindernisse in der Umgebung des Kraftfahrzeugs (**2**) repräsentativ sind und dynamische Raumeinschränkungen für die Bewegung des Kraftfahrzeugs (**2**) darstellen, zu empfangen, und
∘ auf der Grundlage der empfangenen Daten eine geplante seitliche Trajektorie und eine geplante longitudinale Trajektorie für das Kraftfahrzeug (**2**) während des im automatisierten Fahrbetrieb ausgeführten Manövers bei niedriger Geschwindigkeit zu berechnen; und
- einen Bewegungsregler (**13**), der ausgelegt wurde, um:
∘ vom Trajektorienplaner und -regler (**12**) Daten zu empfangen, die für die geplanten seitlichen und longitudinalen Trajektorien repräsentativ sind, und
∘ Befehle für die elektrische Servolenkung (**5**) auf Grundlage der geplanten seitlichen Trajektorie und für das Bremssystem (**6**) und den Antriebsstrang (**7**) auf Grundlage der geplanten longitudinalen Trajektorie zu berechnen;
wobei der MPC-basierte Trajektorienplaner und - regler (**12**) Folgendes umfasst:
- einen MPC-basierten seitlichen Trajektorienplaner und -regler (**12a**), der dazu ausgelegt ist, die geplante seitliche Trajektorie als eine Reihe von Lenkanforderungen (*δ*) zu berechnen, die in einem Kraftfahrzeugsbezugsrahmen referenziert werden; und
- einen MPC-basierten longitudinalen Trajektorienplaner und -regler (**12b**), der dazu ausgelegt ist, die geplante longitudinale Trajektorie als eine Reihe von longitudinalen Beschleunigungsanforderungen (*α*) zu berechnen;
wobei der seitliche Trajektorienplaner und - regler (**12a**) ferner zu Folgendem ausgelegt ist:
- Ausgeben einer Vorhersage des Zustands des Kraftfahrzeugs (**2**) in Bezug auf Position (*X_{vVORHESAGE}*, *Y_{vVORHESAGE}*) und Orientierung (*θ_{vVORHESAGE}*);
wobei das elektronische Fahrzeugdynamiksteuersystem **dadurch gekennzeichnet ist, dass** der seitliche Trajektorienplaner und - regler (**12a**) zu Folgendem ausgelegt ist
- Berechnen eines hindernisfreien Fahrkorridors, innerhalb dessen das Kraftfahrzeug (**2**) im automatisierten Fahrbetrieb gefahren werden kann, ohne mit einem der Hindernisse zu kollidieren, auf der Grundlage des geplanten Fahrwegs, um den hindernisfreien Fahrkorridor als zwei Reihen nachfolgender Korridorsegmente zu definieren, wobei jede der zwei Reihen nachfolgender Korridorsegmente eine jeweilige Grenze des freien Korridors definiert; und
- Echtzeitverändern von Grenzen des freien Korridors auf der Grundlage der Vorhersage des Zustands des Kraftfahrzeugs (**2**), um zu vermeiden, dass das Kraftfahrzeug (**2**) mit einem Hindernis kollidiert,
durch:
- Berechnen von geschätzten vier Kanten oder Ecken des Kraftfahrzeugs **2** auf Grundlage der Vorhersage des Zustands des Kraftfahrzeugs (**2**);
- für jede geschätzte Kante des Kraftfahrzeugs (**2**) Überprüfen, ob die geschätzte Kante mit einem Hindernis auf der Grundlage der Daten kollidieren würde, die für Hindernisse in der Umgebung des Kraftfahrzeugs (**2**) repräsentativ sind;
- wenn eine Kollision zwischen einer geschätzten Kante des Kraftfahrzeugs (**2**) und einem Hindernis erwartet wird, dann wird ein Abstand (*W_{Seg}*) zwischen entsprechenden Korridorsegmenten des freien Korridors (*Y_{Max}*, *Y_{Min}*) um einen seitlichen Versatz (*Lat_{Versatz}*) reduziert; und
- progressives Reduzieren des Abstands (*W_{Seg}*) in jedem Zeitschritt, bis eine Kollision nicht mehr erwartet wird.

2. Elektronisches Fahrzeugdynamiksteuersystem (**1**) nach Anspruch **1**, wobei der seitliche Trajektorienplaner und -regler (**12a**) dazu ausgelegt ist, an den MPC-basierten longitudinalen Trajektorienplaner und -regler (**12b**) einen sicheren Halt des Kraftfahrzeugs (**2**) anzufordern, wenn der Abstand (*W_{Seg}*) kleiner als ein Mindestabstand (*W_{Min}*) ist.

3. Elektronisches Fahrzeugdynamiksteuersystem (**1**) nach Anspruch **2**, wobei die Anforderung eines sicheren Halts darin besteht, den Wert einer ersten Einschränkung (*ξ_{Korridor}*) zu ändern, die die Breite einer Straße berücksichtigt, auf der das Kraftfahrzeug (**2**) fährt, und der MPC-basierte longitudinale Trajektorienplaner und -regler (**12b**) ferner ausgelegt ist, um den Maximalwert des zurückgelegten Abstands (*ξ_{Maxk}*) des Kraftfahrzeugs (**2**) zu bestimmen als: ${ξ}_{Maxk} = Min \left({ξ}_{Ziel}, {ξ}_{Korridor}, {ξ}_{Hindernis}\right) ,$ wo:
*k* den Zeitberechnungsschritt bezeichnet;
*ξ_{Ziel}* eine zweite Einschränkung ist, die eine Zielposition des Kraftfahrzeugs (**2**) berücksichtigt;
*ξ_{Korridor}* die erste Einschränkung ist;
*ξ_{Hindernis}* eine dritte Einschränkung ist, die dynamische Objekte berücksichtigt.

4. Elektronisches Fahrzeugdynamiksteuersystem (**1**) nach einem der vorhergehenden Ansprüche, wobei der seitliche Trajektorienplaner und -regler (**12a**) ferner dazu ausgelegt ist, die Orientierung (*θ_{ROT}*) des Kraftfahrzeugbezugsrahmens relativ zu dem Trägheitsbezugsrahmen entlang des geplanten Fahrwegs dynamisch zu modifizieren, um zu bewirken, dass relative Orientierungen aller Paare aufeinanderfolgender Fahrwegsegmente des geplanten Fahrwegs niedriger als ein vorgegebener Betrag sind.

5. Elektronisches Fahrzeugdynamiksteuersystem (**1**) nach einem der vorhergehenden Ansprüche, wobei der seitliche Trajektorienplaner und -regler (**12a**) ferner dazu ausgelegt ist, in den Trägheitsbezugsrahmen-Drehwinkeln (*θ_{ROT}*) zu berechnen, von denen der Kraftfahrzeugbezugsrahmen relativ zu dem Trägheitsbezugsrahmen entlang des geplanten Fahrwegs gedreht werden soll.

6. Elektronisches Fahrzeugdynamiksteuersystem (**1**) nach einem der vorhergehenden Ansprüche, wobei der seitliche Trajektorienplaner und -regler (**12a**) ferner dazu ausgelegt ist, die geplante seitliche Trajektorie auf Grundlage eines linearisierten Modells zu berechnen, das eine Darstellungssingularität aufweist, wenn die relative Orientierung eines Paars aufeinanderfolgender Fahrwegsegmente des geplanten Fahrwegs gleich oder höher als ein vorgegebener Betrag ist.

## Revendications

1. Système électronique automobile de contrôle du comportement dynamique (**10**) pour un véhicule à moteur (**2**) équipé d'un système automobile de conduite automatisée (**1**) conçu pour amener le véhicule à moteur (**2**) à réaliser des manœuvres à basse vitesse en conduite automatisée ; le système automobile de conduite automatisée (**1**) comprenant :
- un système automobile de détection (**3**) conçu pour détecter des grandeurs liées au véhicule à moteur, et
- des actionneurs automobiles (**4**) comprenant une direction assistée électrique (**5**), un système de freinage (**6**) et un groupe motopropulseur (**7**) ;
le système électronique automobile de contrôle du comportement dynamique (**10**) est conçu pour mettre en œuvre :
- un planificateur de parcours de conduite (**11**) conçu pour :
∘ recevoir des données représentatives d'obstacles dans les environs du véhicule à moteur (**2**) et représentant des contraintes spatiales statiques sur le mouvement du véhicule à moteur (**2**), et
∘ calculer, sur la base des données reçues, un parcours de conduite planifié constitué d'une série de segments de parcours de conduite définis chacun par des points de passage de départ et d'arrivée respectifs et une orientation (*θᵢ*) de ceux-ci référencée dans un référentiel inertiel ;
- un planificateur et contrôleur de trajectoire (**12**) basé sur un contrôle prédictif de modèle (MPC) conçu pour :
∘ recevoir, en provenance du planificateur de parcours de conduite (**11**), des données représentatives du parcours de conduite planifié, et en provenance du système automobile de détection (**3**), des données représentatives de positions et d'orientations du véhicule à moteur (**2**) et d'obstacles dynamiques dans les environs du véhicule à moteur (**2**) et représentant des contraintes spatiales dynamiques sur le mouvement du véhicule à moteur (**2**), et
∘ calculer, sur la base des données reçues, une trajectoire latérale planifiée et une trajectoire longitudinale planifiée pour le véhicule à moteur (**2**) pendant la manœuvre à basse vitesse réalisée en conduite automatisée ; et
- un contrôleur de mouvement (**13**) conçu pour :
∘ recevoir, en provenance du planificateur et contrôleur de trajectoire (**12**), des données représentatives des trajectoires latérale et longitudinale planifiées, et
∘ calculer des commandes pour la direction assistée électrique (**5**) sur la base de la trajectoire latérale planifiée, et pour le système de freinage (**6**) et le groupe motopropulseur (**7**) sur la base de la trajectoire longitudinale planifiée ;
le planificateur et contrôleur de trajectoire (**12**) basé sur un MPC comprenant :
- un planificateur et contrôleur de trajectoire latérale (**12a**) basé sur un MPC conçu pour calculer la trajectoire latérale planifiée sous la forme d'une série de requêtes de direction (*δ*) référencées dans un référentiel de véhicule à moteur ; et
- un planificateur et contrôleur de trajectoire longitudinale (**12b**) basé sur un MPC conçu pour calculer la trajectoire longitudinale planifiée sous la forme d'une série de requêtes d'accélération longitudinale (*α*) ;
dans lequel le planificateur et contrôleur de trajectoire latérale (**12a**) est en outre conçu pour :
- délivrer en sortie une prédiction de l'état du véhicule à moteur (**2**) en termes de position (*X_{vPRED}*, *Y_{vPRED}*) et d'orientation (*θ_{vPRED}*) ;
le système électronique automobile de contrôle du comportement dynamique étant **caractérisé en ce que** le planificateur et contrôleur de trajectoire latérale (**12a**) est conçu pour
- calculer un couloir de conduite sans obstacle, au sein duquel le véhicule à moteur (**2**) peut être conduit en conduite automatisée sans entrer en collision avec aucun des obstacles, sur la base du parcours de conduite planifié, de façon à définir ledit couloir de conduite sans obstacle sous la forme de deux séries de segments de couloir consécutifs, chacune des deux séries de segments de couloir consécutifs définissant une limite respective du couloir libre ; et
- modifier en temps réel les limites du couloir libre sur la base de la prédiction de l'état du véhicule à moteur (**2**) afin d'éviter que le véhicule à moteur (**2**) n'entre en collision avec un obstacle,
par :
- le calcul de quatre bords ou coins estimés du véhicule à moteur **2** sur la base de ladite prédiction de l'état du véhicule à moteur (**2**) ;
- pour chaque bord estimé du véhicule à moteur (**2**), la vérification de si le bord estimé entrerait en collision avec un obstacle sur la base desdites données représentatives d'obstacles dans les environs du véhicule à moteur (**2**) ;
- si une collision entre un bord estimé du véhicule à moteur (**2**) et un obstacle est attendue, alors une distance (*W_{seg}*) entre des segments de couloir correspondants du couloir libre (*Yₘₐₓ*, *Yₘᵢₙ*) est réduite d'un décalage latéral (*Lat_{off}*) ; et
- la réduction progressive de ladite distance (*W_{seg}*) à chaque pas temporel jusqu'à ce qu'une collision ne soit plus attendue.

2. Système électronique automobile de contrôle du comportement dynamique (**1**) selon la revendication **1**, dans lequel le planificateur et contrôleur de trajectoire latérale (**12a**) est conçu pour demander au planificateur et contrôleur de trajectoire longitudinale (**12b**) basé sur un MPC un arrêt de sécurité du véhicule à moteur (**2**) lorsque la distance (*W_{seg}*) est inférieure à une distance minimale (*Wₘᵢₙ*).

3. Système électronique automobile de contrôle du comportement dynamique (**1**) selon la revendication **2**, dans lequel la demande d'arrêt de sécurité consiste à changer la valeur d'une première contrainte (*ξ_{Corridor}*), qui tient compte de la largeur de la route où le véhicule à moteur (**2**) circule, et le planificateur et contrôleur de trajectoire longitudinale (**12b**) basé sur un MPC est en outre conçu pour déterminer la valeur maximale de la distance de circulation (*ξₘₐₓₖ*) du véhicule à moteur (**2**) sous la forme de : ${ξ}_{maxk} = min \left({ξ}_{Goal}, {ξ}_{Corridor}, {ξ}_{Obstacle}\right) ,$ où :
*k* désigne le pas temporel de calcul ;
*ξ_{Goal}* est une deuxième contrainte qui tient compte d'une position cible du véhicule à moteur (**2**) ;
*ξ_{Corridor}* est la première contrainte ;
*ξ_{Obstacle}* est une troisième contrainte qui tient compte d'objets dynamiques.

4. Système électronique automobile de contrôle du comportement dynamique (**1**) selon l'une quelconque des revendications précédentes, dans lequel le planificateur et contrôleur de trajectoire latérale (**12a**) est en outre conçu pour modifier de manière dynamique l'orientation (*θ_{ROT}*) du référentiel de véhicule à moteur par rapport au référentiel inertiel le long du parcours de conduite planifié pour amener les orientations relatives de tous les couples de segments de parcours de conduite successifs du parcours de conduite planifié à être inférieures à une quantité donnée.

5. Système électronique automobile de contrôle du comportement dynamique (**1**) selon l'une quelconque des revendications précédentes, dans lequel le planificateur et contrôleur de trajectoire latérale (**12a**) est en outre conçu pour calculer, dans le référentiel inertiel, les angles de pivotement (*θ_{ROT}*) selon lesquels le référentiel de véhicule à moteur doit être pivoté par rapport au référentiel inertiel le long du parcours de conduite planifié.

6. Système électronique automobile de contrôle du comportement dynamique (**1**) selon l'une quelconque des revendications précédentes, dans lequel le planificateur et contrôleur de trajectoire latérale (**12a**) est en outre conçu pour calculer la trajectoire latérale planifiée sur la base d'un modèle linéarisé qui présente une singularité de représentation chaque fois que l'orientation relative d'un couple de segments de parcours de conduite successifs du parcours de conduite planifié est égale ou supérieure à une quantité donnée.
